## Europäisches Patentamt

(19) **European Patent Office**

**Office européen des brevets**

(11) Veröffentlichungsnummer: **0 069 391**
**B1**

(12) **EUROPÄISCHE PATENTSCHRIFT**

(45) Veröffentlichungstag der Patentschrift:
**06.11.85**

(51) Int. Cl.⁴: **B 60 J 7/06**, B 60 J 7/12

(21) Anmeldenummer: **82106034.0**

(22) Anmeldetag: **06.07.82**

(54) **Transportmulde mit einem Schiebeverdeck.**

(30) Priorität: **06.07.81 DE 8119656 U**

(43) Veröffentlichungstag der Anmeldung:
**12.01.83 Patentblatt 83/2**

(45) Bekanntmachung des Hinweises auf die Patenterteilung:
**06.11.85 Patentblatt 85/45**

(84) Benannte Vertragsstaaten:
**AT FR**

(56) Entgegenhaltungen:
**DE - A - 1 780 141**
**DE - A - 3 002 574**
**DE - C - 1 220 748**

(73) Patentinhaber: **Karl Kässbohrer Fahrzeugwerke GmbH, Peter-Schmid-Strasse 13, D-7900 Ulm (Donau) (DE)**

(72) Erfinder: **Zsunyi, Denis, Hirschweiher 3, D-7913 Senden (DE)**
Erfinder: **Schall, Hans, Luitpoldstrasse 37, D-7910 Neu-Ulm (DE)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

**Beschreibung**

Die Neuerung betrifft eine Anordnung für ein Schiebeverdeck einer Transportmulde gemäss dem Gattungsbegriff des Schutzanspruchs 1.

Im Sinne des Umweltschutzes und zur Vermeidung einer Strassenverschmutzung mit damit einhergehender Verkehrsgefährdung wird immer stärker eine weitestgehende – sogar möglichst vollständige – Abdeckung von an sich offenen Transportmulden während des Strassentransportes gefordert. Neben Rollverdecks, die sowohl in Längs- wie in Querrichtung aufgerollt werden können, um die Lade- oder Muldenöffnung freizugeben, wurde durch die DE-A-1 780 141 ein Schiebeverdeck bekannt, wobei die Mulde in Querrichtung überspannende Spriegel, die das eigentliche Verdeck bildende Plane tragen. Die Spriegel sind an Trägern abgestützt, die ihrerseits an mit Rollen versehenen Wagen angeschlossen sind, welche auf in Muldenlängsrichtung im Bereich der beiden Seitenwandoberkanten angebrachten Führungsschienen verfahrbar sind. Hierbei sind die im Querschnitt Doppel-T-förmigen Führungsschienen stehend angeordnet, und die Wagen sind auf diesen abgestützt.

Bei Beladen der Transportmulde ist es nicht zu vermeiden, dass am Ladegerät anhaftendes oder über dieses hingwrieselndes bzw. -rollendes Gut auf die Führungsschienen für die Wagen des Schiebeverdecks fällt, so dass eine Bewegung der Wagen behindert bzw. unterbunden wird und zum Betrieb des Schiebeverdecks erst die Führungsschienen, möglicherweise auch drehend und/oder gleitende Teile der Wagen gereinigt werden müssen. Eine solche Reinigung ist umständlich und zeitraubend, vor allem, wenn man in Betracht zieht, dass Führungsschienen und drehende, gleitende sowie gelenkig gelagerte Teile in gewissen Zeitabständen einer Schmierung bedürfen und das Schmiermittel das Anhaften von Staub, Sand oder dergleichen begünstigt, weshalb dann wohl häufig das Schliessen des Verdecks zum Transport unterbleibt.

Der Neuerung liegt die Aufgabe zugrunde, eine Anordnung für ein Schiebeverdeck einer Transportmulde anzugeben, durch die die Verschmutzung der Laufschienen und ein mögliches Unbeweglichwerden der auf diesen laufenden Wagen unterbunden wird.

Diese Aufgabe wird bei einem gattungsgemässen Schiebeverdeck dadurch gelöst, dass die Führungsschienen an von den beiden Seitenwandoberkanten nach aussen auskragenden Flanschen hängen und die Wagen an den Führungsschienen hängend gelagert sind. Durch die hängende Anordnung der Führungsschienen wird deren dem Muldeninneren zugewandter Bereich gegen den Einfall von Schmutz bereits abgeschirmt, durch die hängende Anordnung an von den Seitenwandoberkanten auskragenden Flanschen wird eine Verschmutzung der Führungsschienen durch von oben herabfallendes Gut stark eingeschränkt, so dass eine Behinderung der Laufffähigkeit der

Wagen und damit der Verfahrbarkeit des Schiebeverdecks weitestgehend ausgeschaltet ist.

Transportmulden sind an ihren oberen Längskanten meist mit einer Wulst, die u. a. der Versteifung der Seitenwände dient, versehen. Vorteilhafterweise kann an dieser Wulst der nach aussen ragende Flansch gebildet werden, der wie ein Vordach wirkt, wobei dieser Flansch bevorzugterweise eine zum Muldeninneren hin verlaufende Neigung erhält, so dass auf ihn fallendes Gut in die Mulde abgeführt wird.

Es ist von Vorteil, mit lotrechtem Abstand zum oberen Flansch an der Wulst einen weiteren, untenliegenden Flansch anzubringen, und dieser erhält vorzugsweise eine nach abwärts und auswärts gerichtete Neigung, d. h., die beiden Flansche sind zueinander divergierend angeordnet. Zusammen mit einer Wandfläche der Wulst, welche Fläche die beiden Flansche verbindet, wird somit ein Raum mit trapezförmigem Querschnitt gebildet, der die Führungsschiene auf jeder Längsseite der Mulde geschützt aufnimmt und auf der dem Muldeninneren abgewandten Seite offen ist.

Die Führungsschiene erhält bevorzugterweise einen Doppel-T-Querschnitt und wird vorzugsweise einstückig mit den sie tragenden Flanschen ausgebildet. Wulst, zugehörige Flansche und Führungsschiene können somit als Strangpressprofil ausgeformt werden, das in sich aufgrund der Querschnittsform stabil ist.

Jeder Wagen ist mit wenigstens zwei Laufrollen versehen, von denen je eine auf einer beidseits des stehenden Doppel-T-Steges der Führungsschiene gelegenen Lauffläche läuft. Vorzugsweise sind jedoch vier Laufrollen in paarweiser Anordnung vorhanden. Der Durchmesser der Laufrollen wird so gewählt, dass er nur geringfügig kleiner ist als der lotrechte Abstand zwischen den unten liegenden Laufflächen der Doppel-T-Schiene und der zu diesen parallelen Flächen des darüberliegenden kleinen Doppel-T-Schenkels. Damit wirken diese oberen, waagerecht liegenden Flächen als Führungen für die Wagen und sichern deren einwandfreie Auflage auf den unteren Laufflächen.

Der lotrechte Abstand zwischen den Laufflächen für die Wagen und den über den Laufflächen befindlichen Flanschen wird vorzugsweise gering gehalten, um die Schutzwirkung der Flansche voll zur Geltung zu bringen. Es ist anzustreben, den der Aufnahme von Führungsschiene und Wagen dienenden Raum auf ein Minimum zu beschränken, denn je kleiner dieser Raum ist, desto geringer ist die Gefahr für eine Verschmutzung.

Bevorzugterweise liegt die Befestigungsstelle der Spriegel bzw. der diese abstützenden Träger im Wagen tiefer als die Laufflächen an den Führungsschienen, wodurch ebenfalls die Verminderung in der Höhe des die Laufflächen aufnehmenden Raumes begünstigt wird.

Da trotz der geschilderten Anordnung immer noch die Möglichkeit besteht, dass eine Verschmutzung der Laufflächen – vor allem der aussen liegenden Laufflächen – an den Führungsschienen auftreten kann, beispielsweise durch bei der Schwenkbewegung eines Baggers seitwärts geschleudertes Gut, werden gemäss der Erfindung Abstreifplatten an einigen der Wagen vorgesehen. Diese Abstreifplatten erhalten einen Ausschnitt, der dem Querschnitt der Führungsschiene angepasst und so bemessen ist, dass er diese mit geringem Abstand umschliesst. Die Abstreifplatten werden an einer Stirnseite eines Wagens quer zu dessen Laufrichtung angebracht, wobei sie vorzugsweise eine Aussenkontur erhalten, die weitgehend dem Verlauf der den Führungsschienen benachbarten Wände entspricht. Durch diese Abstreifplatten wird eine zusätzliche Reinigung der Führungsschienen (grosser sowie kleiner T-Schenkel) und auch der diesen benachbarten Wände erreicht.

Abstreifplatten brauchen nicht an allen Wagen vorgesehen zu sein; wichtig ist, dass vor allem die auf jeder Längsseite der Muldenrückwand bzw. -frontwand zunächstliegenden Wagen mit einer Abstreifplatte an ihrer rückseitigen bzw. frontseitigen Stirnfläche ausgestattet sind, denn diese Wagen müssen bei Schliessen des Verdecks nach dem Beladevorgang die wesentliche Reinigungsarbeit übernehmen.

Transportmulden sind in vielen Fällen mit einer von der Oberkante der Frontwand nach vorne auskragenden Brücke versehen, die zur Aufnahme des Verdecks im zusammengeschobenen Zustand – also bei vollständig freigelegter Ladeöffnung der Mulde – dienen kann. In diesem Fall ist es von Vorteil, wenn auf jeder Muldenlängsseite ein weiterer Wagen mit einer Abstreifplatte versehen wird, um auch die Laufschienen im Bereich der Brücke restlos zu reinigen. Vorzugsweise sind das die beiden Wagen, die im auseinandergezogenen Zustand des Verdecks, wenn also die Muldenöffnung verschlossen ist, der Muldenfrontwand zunächst liegen. Die Abstreifplatte wird hierbei an der der Muldenöffnung zugekehrten Stirnwand der Wagen angebracht.

Die Position der Wagen und damit die Länge der Brücke wird so gewählt, dass bei vollkommen geöffnetem Verdeck die beiden letzten Wagen, d. h. die beiden der Muldenrückwand am nächsten liegenden Wagen, ausserhalb der von der Innenfläche der Muldenfrontwand bestimmten Ebene liegen. Im geschlossenen Zustand des Verdecks sollen dann die beiden Wagen, die zwischen den frontseitigen und rückwärtigen Wagen liegen sowie zusätzlich mit einer Abstreifplatte versehen sind, an einer Stelle liegen, die sich zwischen den Ebenen befindet, die von der Innenfläche der Frontwand und von der Rückwand bestimmt werden, und vorzugsweise sollen sich diese Wagen nahe der von der Innenfläche der Frontwand bestimmten Ebene befinden.

Die Neuerung wird anhand der Zeichnung erläutert.

Es zeigen:

Figur 1a und 1b zusammen eine Seitenansicht einer Transportmulde, deren Mittelteil weggelassen wurde, mit geschlossenem Verdeck;

Figur 2 den vorderen Teil der Transportmulde von Figur 1a mit geöffnetem Verdeck;

Figur 3 den Schnitt nach der Linie III–III in der Figur 1a;

Figur 4 den Schnitt nach der Linie IV–IV in der Figur 1b;

Figur 5 eine Abstreifplatte in Ansicht.

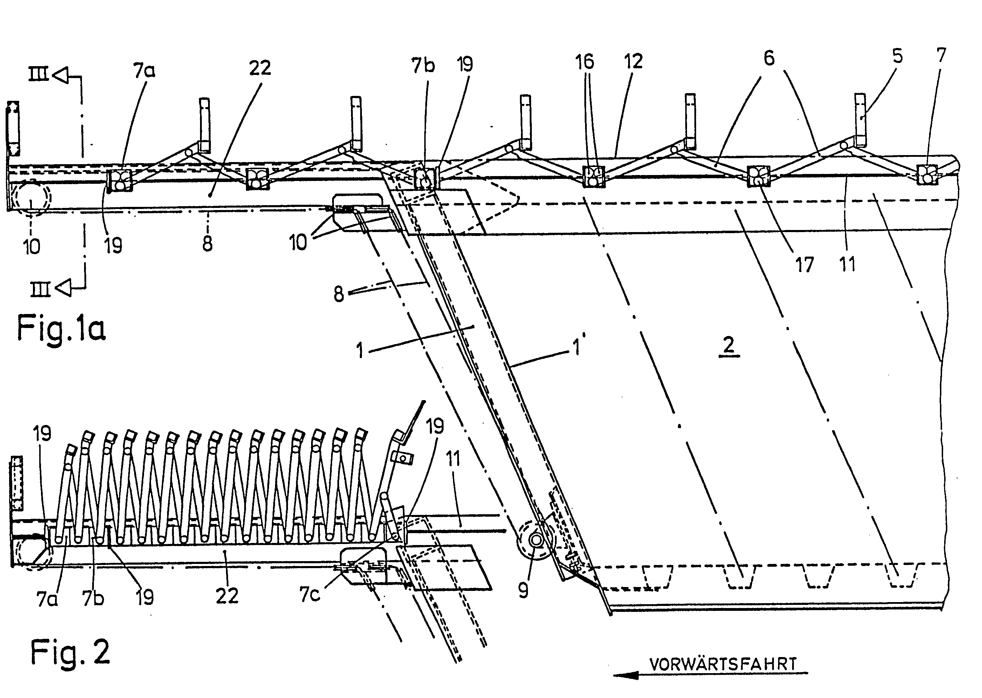

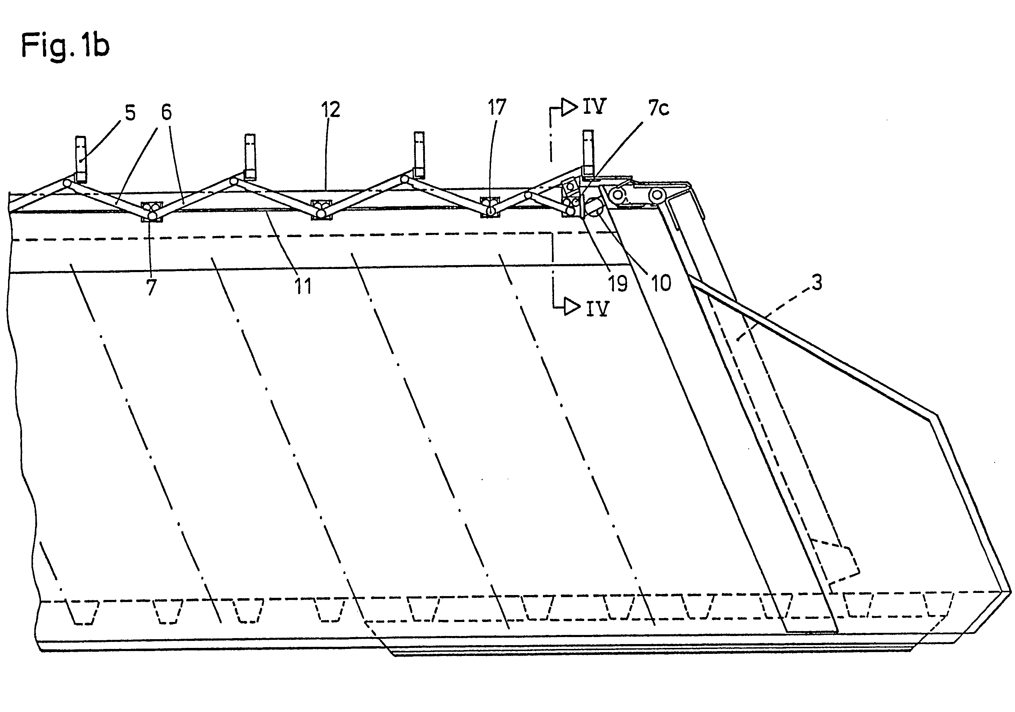

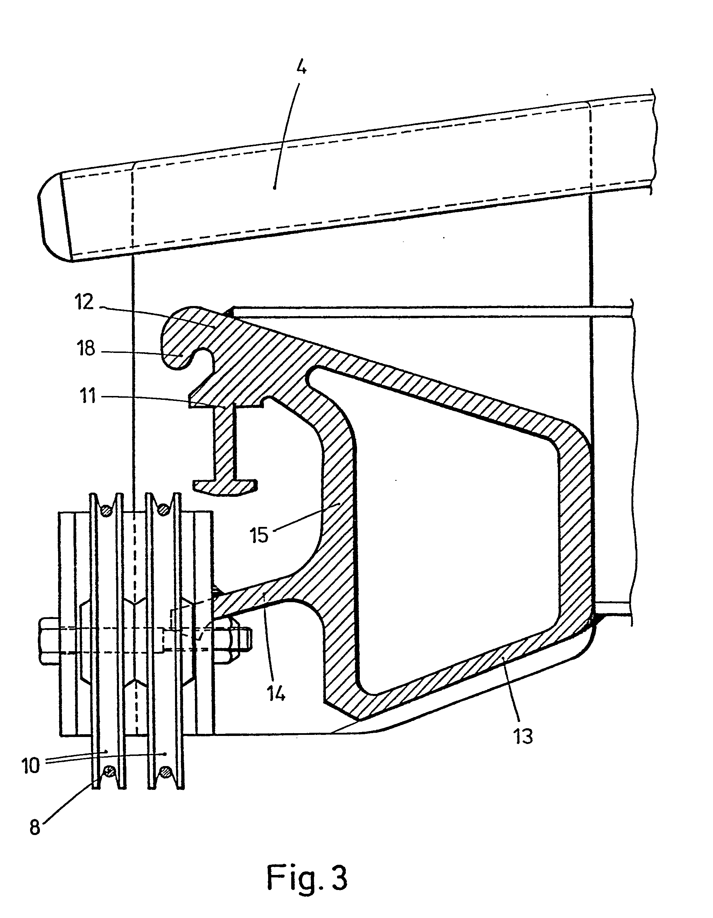

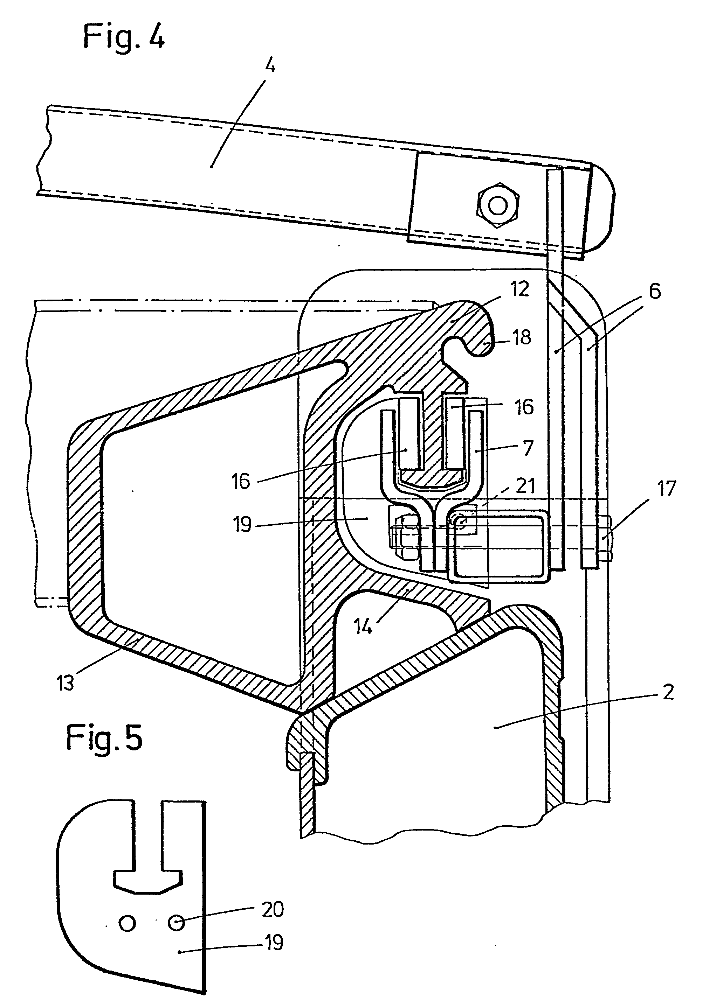

Die Transportmulde hat eine Frontwand 1, zwei gleich ausgebildete Seitenwände und eine Rückwand 3. Zur Abstützung eines (nicht gezeigten) Verdecks sind die Mulde in Querrichtung überspannende Spriegel 4 (Fig. 3 und 4) vorgesehen, die von den stehenden Trägern 5 abgestützt sind. Die Spriegelträger 5 sind im gezeigten Beispiel an in Längsrichtung der Mulde entlang deren beiden Oberkanten hintereinander in Zick-Zack-Form angeordneten Streben 6 angebracht. Zwei einander benachbarte Streben 6 sind im Bereich ihrer oberen Enden nahe einem zugeordneten Spriegelträger 5 gelenkig verbunden. Die unteren Enden dieses Strebenpaares sind gelenkig an je einem Wagen 7 angeschlossen, an den auch je eine den Streben des ersten Paares benachbarte Strebe eines weiteren Strebenpaares angeschlossen ist. Die Wagen 7 sind in Längsrichtung der Mulde verfahrbar, wodurch das von den Spriegeln 4 getragene Verdeck in den die Mulde abdeckenden Zustand (Fig. 1a und 1b) oder den die Muldenöffnung freigebenden Zustand (Fig. 2) verfahren werden kann.

Für das Verfahren der Wagen ist an beiden Muldenlängsseiten ein Seilzug 8 mit Antriebs- 9 und Umlenkrollen 10 vorgesehen (die rückwärtige Umlenkrolle wurde in Fig. 4 der Deutlichkeit halber weggelassen).

Die Wagen 7 laufen auf Führungsschienen 11, die erfindungsgemäss an einem von den Seitenwandoberkanten nach aussen auskragenden Flansch 12 hängend angeordnet sind, der wie Fig. 3 und 4 zeigen, Teil eines wulstartigen Körpers 13 sein kann, der sich längs der Oberkanten der Seitenwände 2 erstreckt.

Im gezeigten Beispiel hat dieser wulstartige Körper 13 im Seitenwandbereich mit Abstand vom oberen Flansch 12 einen unteren Flansch 14, der ebenfalls vom Körper 13 nach aussen ragt, wobei der obere und untere Flansch jeweils nach aussen hin geneigt sind, also divergierend angeordnet sind. Zusammen mit einer Wandfläche 15 des wulstartigen Körpers 13 umschliessen die Flansche 12, 14 einen trapezförmigen Raum, der auf der dem Muldeninneren abgewandten Seite offen ist und in dem sich die Führungsschiene 11 befindet.

Die Führungsschienen 11 haben im Querschnitt eine Doppel-T-Form und hängen am Flansch 12, mit dem sie vorzugsweise einstückig ausgebildet sind. Wie die Fig. 3 und 4 zeigen, können der wulstartige Körper 13, die Flansche 12, 14 und die Führungsschiene 11 als Strangpressprofil ausgeformt werden.

Gemäss der Erfindung sind die die Spriegel 4 tragenden Wagen 7 an den Führungsschienen 11 hängend angeordnet, d. h., die dem oberen Flansch 12 zugewandten Seiten des kleinen Doppel-T-Schenkels bilden die Laufflächen für die Rollen 16 der Wagen 7.

Vorzugsweise hat jeder Wagen vier Laufrollen 16, und zwar jeweils zwei Stück auf beiden Seiten des grossen Schenkels der Führungsschiene, wobei der lotrechte Abstand zwischen den unteren Laufflächen und den darüber liegenden Flächen, d. h. also die lotrechte Erstreckung des Steges der Doppel-T-Schienen, nur geringfügig grösser gewählt wird als der Durchmesser der Rollen 16, wie Fig. 4 zeigt, so dass die Wagen einwandfrei abgestützt und geführt sind.

Die Befestigung 17, z. B. eine Schraube, der Streben 6 an den Wagen 7 liegt vorzugsweise tiefer als die Laufflächen der Führungsschienen 11. Durch diese Anordnung und durch die hängende Lagerung der Wagen 7 kann der Abstand zwischen den Flanschen 12 und 14 auf ein Minimum beschränkt werden, so dass die Gefahr einer Verschmutzung der Laufschienen durch in den die Laufschienen aufnehmenden Raum von der Seite her einfallende Fremdkörper stark vermindert wird. Die Gefahr kann noch verkleinert werden, wenn, wie Fig. 3 und 4 zeigen, der obere Flansch 12 mit einer nach unten ragenden Nase 18 versehen wird.

Um eine einwandfreie Verfahrbarkeit für die Wagen zu gewährleisten, werden Abstreifplatten 19 vorgesehen, die an den Wagen 7 angebracht sind, und zwar quer zu deren Laufrichtung. Die Abstreifplatten 19 haben die Aufgabe, vor allem die Führungsschienen 11 von Schmutz zu befreien, um einen freien Wagenlauf sicherzustellen. Deshalb sind die Abstreifplatten 19, wie Fig. 5 zeigt, mit einem Ausschnitt versehen, der eng dem Querschnitt der Führungsschienen angepasst ist. Darüber hinaus ist es von Vorteil, wenn die Aussenumrissgestalt der Abstreifplatten 19 so gewählt ist, dass sie dem Verlauf der Wände, die den Raum für die Führungsschienen 11 umschliessen, entspricht. Damit wird auch eine Reinigung dieser Wände, vor allem der Oberfläche des unteren Flansches 14, erreicht. Die Abstreifplatten weisen Befestigungslöcher 20 auf, die von in die Wagen eingedrehten Schrauben 21 durchsetzt sind.

Es werden nur einige der Wagen mit Abstreifplatten ausgestattet. Wichtig ist, dass jeder der auf jeder Muldenlängsseite dem frontseitigen und dem rückwärtigen Ende der Mulde zunächst befindlichen Wagen 7a und 7c mit einer an seiner frontseitigen bzw. rückseitigen Stirnfläche angebrachten Abstreifplatte versehen ist. Diese Wagen treffen bei Schliessen des Verdecks nach dem Beladen der Mulde zuerst auf irgendwelche Schmutzteile (Erdbrocken, Steine usw.), weshalb hier Abstreifplatten vor allem notwendig sind, und zwar insbesondere dann, wenn das Verdeck zum Beladen der Mulde über deren Ladeöffnung hin- und herbewegt werden muss, wie es der Fall ist, wenn die Mulde eine nach vorne auskragende Brücke 22, wie eine solche in Fig. 1a und 2 gezeigt ist, nicht aufweist.

Ist eine solche Brücke 22 jedoch vorhanden, auf der das Verdeck im zusammengeschobenen Zustand – also bei vollkommen freier Ladeöffnung der Mulde – aufgenommen werden kann, dann erhält vorzugsweise ein weiteres Wagenpaar auch noch Abstreifplatten. Hierbei handelt es sich um die beiden Wagen 7b auf jeder Muldenlängsseite. Es sind das die Wagen, die im Schliesszustand des Verdecks der Muldenfrontwand 1 zunächst liegen und die an ihrer der Muldenöffnung zugewandten Stirnfläche je eine Abstreifplatte 19 erhalten.

Vorzugsweise wird die Position der Wagen 7b für den geschlossenen Zustand des Verdecks so gewählt, dass die Abstreifplatten 19 dann bereits die freie Muldenöffnung erreichen, d. h., die von der Innenfläche 1' der Frontwand 1 bestimmte Ebene überschritten haben.

Aus Vorstehendem ergibt sich, dass erfindungsgemäss eine Anordnung für ein Schiebeverdeck einer Transportmulde geschaffen wird, das nicht nur die Forderung nach 100%iger Abdeckung der Mulde erfüllt, sondern darüber hinaus auch – selbst bei dem rauhen Einsatz, dem solche Transportmulden unterliegen – ständig funktionsfähig erhalten werden kann.

**Patentansprüche**

1. Transportmulde mit einer Frontwand (1), zwei Seitenwänden (2) und einer Rückwand (3), sowie einem Schiebeverdeck mit das Verdeck tragenden, die Mulde in Querrichtung überspannenden Spriegeln (4), die an mit Rollen (16) versehenen Wagen (7), welche auf die Längsrichtung der Mulde im Bereich deren beiden Seitenwandoberkanten befindlichen Führungsschienen (11) verfahrbar sind, abgestützt sind, dadurch gekennzeichnet, dass die Führungsschienen (11) an von den beiden Seitenwandoberkanten nach aussen auskragenden Flanschen (12) hängen und die Wagen (7) an den Führungsschienen hängend gelagert sind.

2. Transportmulde nach Anspruch 1, dadurch gekennzeichnet, dass die Führungsschienen (11) im Querschnitt Doppel-T-förmig ausgebildet sind.

3. Transportmulde nach Anspruch 1 oder 2, dadurch gekennzeichnet, dass die Führungsschienen einstückig mit den sie tragenden Flanschen (12) ausgebildet sind.

4. Transportmulde nach einem der Ansprüche 1 bis 3, dadurch gekennzeichnet, dass jeder Wagen (7) mit wenigstens zwei Rollen (16) versehen ist, von denen je eine auf einer beidseits des stehenden Doppel-T-Steges der Führungsschienen gelegenen Lauffläche läuft.

5. Transportmulde nach einem der Ansprüche 1 bis 4, dadurch gekennzeichnet, dass die Rollen (16) einen Durchmesser haben, der nur geringfügig kleiner ist als der lotrechte Abstand zwischen den waagerechten Doppel-T-Schenkeln der Führungsschienen (11).

6. Transportmulde nach einem der Ansprüche 1 bis 5, dadurch gekennzeichnet, dass die Spriegel (4) an den Wagen (7) tiefer als die Laufflächen der Führungsschienen abgestützt sind.

7. Transportmulde nach einem der Ansprüche 1 bis 6, dadurch gekennzeichnet, dass jeder der auf jeder Muldenlängsseite dem frontseitigen und dem rückwärtigen Ende der Transportmulde zunächst befindlichen Wagen (7a, 7c) an seiner frontseitigen bzw. rückwärtigen Stirnfläche mit einer quer zur Wagenlaufrichtung liegenden, einen Ausschnitt für die Führungsschiene aufweisenden und diese mit geringem Zwischenraum umschliessenden Abstreifplatte (19) versehen ist.

8. Transportmulde nach einem der Ansprüche 1 bis 7, die eine von ihrer Frontwand nach vorne auskragende Brücke zur Aufnahme des Schiebeverdecks im zusammengeschobenen, die Muldenöffnung freigebenden Zustand aufweist, dadurch gekennzeichnet, dass jeder der beiden Wagen (7b), die im auseinandergezogenen, die Muldenöffnung verschliessenden Zustand des Verdecks auf beiden Muldenlängsseiten der Muldenfrontwand (1) zunächst liegen, an seiner muldenseitigen Stirnwand mit einer Abstreifplatte (19) versehen ist.

9. Transportmulde nach Anspruch 8, dadurch gekennzeichnet, dass im geschlossenen Zustand des Verdecks die Abstreifplatten (19) an einer Stelle angeordnet sind, die zwischen den von der Innenfläche (1') der Frontwand (1) und der Rückwand (3) der Mulde bestimmten Ebenen liegt.

10. Transportmulde nach einem der Ansprüche 7 bis 9, dadurch gekennzeichnet, dass die Abstreifplatten (19) in ihrem Umriss entsprechend dem Verlauf der den Führungsschienen (11) benachbarten Wände ausgestaltet sind.

**Claims**

1. Loading bed having a front wall (1), two side walls (2) and a rear wall (3), as well as a slidable cover with hoops (4) spanning the bed in transverse direction and carrying the cover, which hoops are supported on carriers (7) which are provided with rollers (16) and are movable on guide rails (11) located in longitudinal direction of the bed, in the region of its two side wall upper edges, characterised in that the guide rails (11) hang from flanges (12) projecting outwards from the two side wall upper edges and the carriages (7) are suspended on the guide rails.

2. Loading bed according to Claim 1, characterised in that the guide rails (11) are designed double-T-shaped in cross section.

3. Loading bed according to Claims 1 or 2, characterised in that the guide rails are designed as one piece with the flanges (12) carrying them.

4. Loading bed according to one of Claims 1 to 3, characterised in that each carriage (7) is provided with at least two rollers (16), of which one in each case runs on a running surface lying on either side of the upright double-T-stem of the guide rails.

5. Loading bed according to one of Claims 1 to 4, characterised in that the rollers (16) have a diameter which is only slightly smaller than the perpendicular distance between the horizontal double-T-arms of the guide rails (11).

6. Loading bed according to one of Claims 1 to 5, characterised in that the hoops (4) on the carriages (7) are supported lower than the running surfaces of the guide rails.

7. Loading bed according to one of Claims 1 to 6, characterised in that each of the carriages (7a, 7c) nearest to the front-sided and the rear end of the loading bed on each longitudinal side of the bed is provided on its front-sided or rear face with a scraper plate (19), lying transverse to the running direction of the carriage, having a cut-out for the guide rail and enclosing the latter with little intermediate space.

8. Loading bed according to one of Claims 1 to 7, which has a bridge projecting forwards from its front wall for receiving the slidable cover in pushed-together condition, exposing the bed opening, characterised in that, in the pulled-out condition of the cover, closing the bed opening, each of the two carriages (7b) nearest to the front wall (1) of the bed on either longitudinal side of the bed is provided on its bed-sided face with a scraper plate (19).

9. Loading bed according to Claim 8, characterised in that, in the closed condition of the cover, the scraper plates (19) are arranged at a point lying between the planes determined by the inner surface (11) of the front wall (1) and the rear wall (3) of the bed.

10. Loading bed according to one of Claims 7 to 9, characterised in that the scraper plates (19) are shaped in their outline corresponding to the profile of the walls neighbouring the guide rails (11).

**Revendications**

1. Benne de camion présentant une paroi frontale (1), deux parois latérales (2) et une paroi arrière (3), ainsi qu'une couverture coulissante équipé d'arceaux (4) qui sont prévus à la transversale de la caisse, supportent la capote et s'appuient sur des chariots (7) dotés de galets (16), ces chariots se déplaçant sur des glissières (11) disposées dans le sens longitudinal de la benne, à proximité des rebords supérieurs de ses deux parois latérales, caractérisée en ce que les glissières (11) sont accrochées à des brides (12) en saillie externe par rapport aux rebords supérieurs précités, les chariots (7) étant eux-mêmes suspendus aux glissières.

2. Benne de camion selon la revendication 1, caractérisée en ce que les glissières (11) présentent une section en double T.

3. Benne de camion selon une des revendications 1 et 2, caractérisée en ce que les glissières sont réalisées d'une seule pièce avec les brides (12) qui les supportent.

4. Benne de camion selon une quelconque des revendications 1 à 3, caractérisée en ce que chaque chariot (7) est doté de deux galets au moins (16), qui roulent respectivement sur les deux surfaces situées de part et d'autre de la traverse verticale du double T, formé par la glissière.

5. Benne de camion selon une quelconque des revendications 1 à 4, caractérisée en ce que le diamètre des galets (16) est très légèrement inférieur à la distance verticale, comprise entre les côtés horizontaux du double T formé par les glissières (11).

6. Benne de camion selon une quelconque des revendications 1 à 5, caractérisée en ce que l'appui des arceaux (4) sur les chariots (7) se situe à un niveau inférieur à celui des bandes de roulement des glissières.

7. Benne de camion selon une quelconque des revendications 1 à 6, caractérisée en ce que les chariots (7a, 7c), qui se situent respectivement à proximité immédiate des extrémités avant et arrière de la benne, sur les deux rebords latéraux de cette dernière, sont équipés d'un racloir (19) prévu à la transversale de leur sens de marche et muni d'une entaille pour la glissière, qu'il enveloppe avec un espace intermédiaire minime.

8. Benne de camion selon une quelconque des revendications 1 à 7, munie d'un pont qui dépasse vers l'avant sa paroi frontale et permet de recevoir la capote repliée dégageant l'ouverture de la benne, caractérisée en ce que les chariots (7b) respectivement situés à proximité immédiate de la paroi frontale (1) et sur les deux rebords latéraux de la benne, lorsque la capote est tirée et ferme l'ouverture de cette dernière, sont munis d'un racloir (19) sur leur face frontale tournée vers l'intérieur de la caisse.

9. Benne de camion selon la revendication 8, caractérisée en ce que les racloirs (19) se situent en un point, compris entre les plans définis par la surface interne (1') de la paroi frontale (1) et la paroi arrière (3) de la benne, lorsque la capote est en position de fermeture.

10. Benne de camion selon une quelconque des revendications 7 à 9, caractérisée en ce que le contour des racloirs (19) correspond à l'allure des parois adjacentes aux glissières (11).

Fig.1a

Fig.2

VORWÄRTSFAHRT

# Fig. 1b

5   6   12   17   IV   7c

7   11   19   10   IV   3

6

0069391

Fig. 3

0069391

Fig. 4

Fig. 5

13